# EUROPÄISCHE PATENTSCHRIFT

(11) **EP 0 499 071 B1**
(45) Veröffentlichungstag und Bekanntmachung des Hinweises auf die Patenterteilung: **03.08.1994**
(21) Anmeldenummer: 92101161.5
(22) Anmeldetag: 24.01.1992
(51) Int. Cl.: F01P 7/16, F01P 3/20, F01P 7/04, F01P 7/02

(54) **Kühlanlage für ein Fahrzeug mit Verbrennungsmotor**
Cooling system for an intenal combustion engine of a motor vehicle
Système de refroidissement pour un moteur à combustion interne d'un véhicule

(30) Priorität: 11.02.1991 DE 4104093
(43) Veröffentlichungstag der Anmeldung: 19.08.1992
(73) Patentinhaber: Behr GmbH & Co., D-70469 Stuttgart (DE)
(72) Erfinder: Banzhaf, Matthias, Dipl.-Ing., W-7250 Leonberg (DE); Baruschke, Wilhelm, Dipl.-Ing., W-7321 Wangen (DE); Barwig, Jürgen, Dipl.-Ing. (FH), W-7132 Illingen (DE); Bauer, Dieter, Dipl.-Ing., W-7000 Stuttgart 30 (DE); Eitel, Jochen, Dipl.-Ing., W-7311 Bissingen/Teck (DE); Hauser, Kurt, Dipl.-Ing., W-7000 Stuttgart 30 (DE); Helms, Werner, Dipl.-Ing., W-7300 Esslingen (DE); Lochmar, Karl, Dipl.-Ing. (FH), W-7143 Vaihingen/Enz (DE)
(74) Vertreter: Riedel, Peter, Dipl.-Ing.

(56) Entgegenhaltungen:
- DE-A- 3 737 390
- FR-A- 1 441 893
- GB-A- 2 085 524
- US-A- 4 413 596
- US-A- 4 726 325

## Beschreibung

Die Erfindung bezieht sich auf eine Kühlanlage für Fahrzeuge mit Verbrennungsmotor der im Oberbegriff des Anspruchs 1 angegebenen Gattung.

Aus der EP-PS 0 156 078 ist eine Kühlanlage mit mehreren Kühlkreisläufen bekannt, die jeweils für das Kühlmittel des Motors, für das Motoröl und für die Ladeluft einen Wärmetauscher besitzt. Diese Wärmetauscher sind so angeordnet, daß ein gemeinsamer Kühler-Lüfter für eine ausreichende luftseitige Beaufschlagung der Kühler sorgt. Es ist außerdem eine Schalteinrichtung vorgesehen, die in Abhängigkeit verschiedener Meßsignale von Temperaturfühlern Stellmittel aktiviert, die auf einen hydrostatischen Antrieb des Kühler-Lüfters einwirken.

Die bekannte Anordnung ist jedoch mit dem Nachteil behaftet, daß die Wärmetauscherleistung für alle Kühlkreisläufe stets nach dem höchsten Bedarf eines der Kühlkreisläufe ausgerichtet wird, was in den übrigen Kühlkreisläufen wiederum zu ungünstigen Temperaturen bzw. Betriebszuständen führen kann.

In der US-A-4,726,325 ist eine Kühlanlage für einen Verbrennungsmotor beschrieben, die zwei Wärmetauscher mit zwei getrennten Kühlmittelkreisläufen umfaßt. Dabei ist ein erster Kühlmittelkreis für den Zylinderkopf und ein zweiter Kühlmittelkreis für den Motorblock vorgesehen. Jeder dieser Kühlkreisläufe besitzt eine Pumpe, einen steuerbaren Kühlerbypass und ein Kühlgebläse, wobei alle steuerbaren Antriebe von einer gemeinsamen Steuereinheit gesteuert werden. Die Temperaturen und ggf. weitere Zustände des Fahrzeugs werden in der Steuereinrichtung zentral erfaßt und daraus werden die Steuersignale zur Beeinflussung der Kühlmitteltemperatur ermittelt. Eine Einflußnahme auf andere Kühlkreisläufe wie beispielsweise für das Motoröl oder die Ladeluft ist dabei nicht gegeben.

Aus der DE-A-37 37 390 ist ein Flüssigkeitskühlsystem für eine Brennkraftmaschine mit Ölvorwärmung bekannt, bei der mehrere Wärmetauscher hintereinander im selben Kühlluftstrom liegen. Zwei Kühlkreisläufe, nämlich ein Hochtemperaturkreislauf und ein Niedertemperaturkreislauf sind getrennt ausgeführt und werden durch separate Thermostatventile gesteuert. Dem Ölkühler wird die in den beiden Kühlern erwärmte Luft zugeführt, so daß die Aufheizung des Schmiermittels auf die optimale Temperatur beschleunigt wird. Außerdem ist der Ölkühler noch mit einer zusätzlichen Heizeinrichtung, die bedarfsweise zugeschaltet werden kann, versehen.

Es ist daher die Aufgabe der vorliegenden Erfindung, eine Kühlanlage für Fahrzeuge mit Verbrennungsmotor der im Oberbegriff des Anspruchs 1 angegebenen Gattung zu schaffen, bei der in Abhängigkeit von einer Vielzahl gemessener Zustandsgrößen, insbesondere der Betriebstemperaturen, eine individuelle Leistungsregelung jedes Kühlkreislaufs sowie des der Fahrzeugheizung zugeordneten Heizkörpers, jedoch unter Berücksichtigung des Gesamtsystems, möglich ist.

Diese Aufgabe wird bei einer Kühlanlage der bezeichneten Art durch die kennzeichnenden Merkmale des Anspruchs 1 gelöst. Eine bevorzugte Weiterbildung.des- Erfindungsgegenstandes besteht darin, daß als Betätigungsmittel für flüssige Medien drehzahlgesteuerte Pumpen und für die Kühlluft drehzahlgeregelte Lüfter vorgesehen sind. Durch drehzahlgesteuerte Pumpen kann der jeweilige Durchsatz des Wärmetauscherfluids durch den Wärmetauscher gesteuert werden, jedoch ist nicht an allen Stellen eines Fluidkreislaufs die Anordnung einer Pumpe sinnvoll. Es ist daher ebenso möglich, als Betätigungsmittel ein elektrisch ansteuerbares Ventil vorzusehen.

Solange ein Betriebsmittel eine bestimmte Temperatur nicht überschreitet, ist es in den meisten Fällen nicht sinnvoll, mit der Kühlung zu beginnen, im Gegenteil, es ist u.U. sogar zweckmäßig in der Anlaufphase aufzuheizen. Es ist daher vorteilhaft, daß neben dem Kühler für das Motorkühlmittel auch mindestes ein weiterer Wärmetauscher einen ventilgesteuerten Bypass besitzt. Zur optimalen Regelung eines Kühlkreislaufs wird vorgeschlagen, daß der Kühlkreislauf mit einer drehzahlgesteuerten Pumpe und einem ventilgesteuerten Bypass ausgestattet ist.

Die Unterdrückung der Kühlung in der Warmlaufphase kann auch dadurch erreicht werden, daß der Fluiddurchsatz durch Abschalten der Pumpe oder Schließung der Ventile in der betreffenden Leitung unterbunden wird.

Bekanntlich ist das Temperaturprofil innerhalb eines Motors sehr unterschiedlich, denn die Temperaturspitze tritt im Zylinderkopf auf, wohingegen der Motorblock einer erheblich niedrigeren Temperatur ausgesetzt ist. Es wird daher vorgeschlagen, daß für den Motorblock und den Zylinderkopf jeweils ein separater Kühlmittelzulauf und Kühlmittelablauf vorgesehen sind, und mindestens einer dieser Kühlmittelanschlüsse mittels eines Ventils drossel- oder absperrbar ist.
Die Wärmetauscher für das Motoröl, die Ladeluft oder das Getriebeöl, können luftbeaufschlagt sein, was den geringsten Aufwand für diese Kühlkreisläufe bedeutet. Günstigere Temperaturverläufe und eine differenziertere Regelung der jeweiligen Kühlkreisläufe, insbesondere im Hinlick auf die verschiedenen Stoffströme; können jedoch dadurch erreicht werden, daß in die Kühlkreisläufe für das Motoröl, und/oder die Ladeluft, und/oder das Getriebeöl ein Zwischenwärmetauscher eingesetzt ist, der von einem Zwischenwärmeträgermedium, beaufschlagt ist. Durch entsprechende Verbindungsleitungen und Ventile kann während der Warmlaufphase des Verbrennungsmotors der Zwischenwärmeträgerkreislauf dem Kühlmittelkreislauf zugeschaltet werden, damit ein bereits höheres Temperaturniveau im Hauptkühlkreislauf zur schnelleren Erwärmung der weiteren Fluide genutzt werden kann, was insbesondere der Fall ist, wenn ein Abgaswärmetauscher und/oder Wärmespeicher in der Gesamtanlage enthalten ist. Um die Kreisläufe der Zwischenwärmetauscher unabhängig vom Hauptkühlkreislauf betreiben zu können, ist es vorteilhaft, daß in den Kühlmittelanschlußleitungen der Zwischenwärmetauscher zusätzliche Pumpen mit Ventilen oder drehzahlgesteuerten Pumpen vorgesehen sind.

Beim Betrieb des Verbrennungsmotors unterhalb seiner Betriebstemperatur kann zum schnelleren Aufheizen und somit beschleunigten Erreichen der Betriebstemperatur, die im Abgas enthaltene Wärme zurückgewonnen werden. Dies geschieht dadurch, daß in der Abgasleitung des Verbrennungsmotors ein Abgaswärmetauscher angeordnet ist, der indirekt die dem Abgas entzogene Wärme dem Kühlmittelkreislauf des Verbrennungsmotors zuführt. Bei einer indirekten Wärmeübertragung wird der Abgaswärmetauscher sekundärseitig von einem mittels eines Gebläses erzeugten Luftstrom beaufschlagt, der wiederum über einen vom Kühlmittel des Motorkühlkreislaufs durchströmten Wärmetauschers zugeführt wird.

In an sich bekannter Weise wird die im Kühlmittel enthaltene Wärmeenergie zur Fahrzeugheizung benutzt. Gemäß einer vorteilhaften Weiterbildung des Erfindungsgegenstandes, wird an den Motorkühlkreislauf nicht nur ein leistungsgeregelter Heizkörper, sondern außerdem ein Wärmespeicher angeschlossen, wobei dieser Wärmespeicher in Serie mit dem Heizkörper oder parallel zu diesem schaltbar oder vollständig absperrbar ist. Auf diese Weise kann Wärmeenergie, die sonst als Verlustenergie im Kühler abgebaut wird, zumindest im Rahmen einer vorbestimmten Menge, gespeichert werden, die dann bei Bedarf auf Abruf zur Verfügung steht und zu einer beschleunigten Aufheizung des Innenraums oder des Verbrennungsmotors dient.

An den Kühlmittelkreislauf können außerdem zusätzliche Heizeinrichtungen für Nebenaggregate, beispielsweise Heizungen für das Wischwasser einer Scheibenwaschanlage, angeschlossen sein. Ebenso ist es möglich, zur Kühlung von Nebenaggregaten, beispielsweise wassergekühlten Lichtmaschinen, absperrbare Kühlmittelleitungen, vorzusehen. Zur Steuerung des Luftdurchsatzes, durch die kühlluftbeaufschlagten Wärmetauscher, ist es zweckmäßig, mindestens einen drehzahlgesteuerten Lüfter diesen Wärmetauschern zuzuordnen. Der Antrieb dieses Lüfters kann beispielsweise mittels eines Elektromotors, einer Flüssigkeitsreibungskupplung oder eines hydrostatischen Antriebs erfolgen.

Bei sehr niedrigen Außentemperaturen kann unter Umständen die aufgrund des Staudrucks den Wärmetauscher durchsetzende Luftmenge zu groß sein, weshalb es zweckmäßig ist, im Luftströmungsweg eine Jalousie anzuordnen, die in Abhängigkeit von Ausgangssignalen der zentralen Steuereinheit steuerbar ist. Um die Stärke der Luftbeaufschlagung der dem Luftstrom ausgesetzten Wärmetauscher zu entkoppeln ist es vorteilhaft, daß mindestens ein Wärmetauscher mit einer steuerbaren Luftwegweiche versehen ist. Insbesondere bei gekapselten Verbrennungsmotoren kann bei niedrigen Luftdurchsatzraten durch die Wärmetauscher die Luftbeaufschlagung mancher Aggregate, beispielsweise Turbolader, Lichtmaschine oder Zylinderkopf, unzureichend sein. Bei solchen Anordnungen von Verbrennungsmotoren ist es zweckmäßig, daß ein separater Luftführungskanal zur gezielten Beaufschlagung bestimmter Aggregate im Motorraum mit Kühlluft vorgesehen ist.

Ausführungsbeispiele der erfindungsgemäßen Kühlanlage werden nachstehend anhand der Zeichnung näher erläutert:

In der Zeichnung zeigt:
- **Fig. 1**: eine erste Ausführungsform der Kühlanlage mit vier separaten Kühlkreisläufen;
- **Fig. 2**: eine zweite Ausführungsform mit Zwischenwärmetauschern;
- **Fig. 3**: eine Ausführungsvariante zu Fig. 2;
- **Fig. 4**: die Darstellung einer Kühlanlage mit Luftführungs- und Steuermitteln;
- **Fig. 5**: eine Kühlanlage mit erweitertem Kühlmittelkreis;
- **Fig. 6**: eine Ausführungsvariante, bei der alle Kühlkreisläufe in Verbindung mit dem Kühlmittel des Verbrennungsmotors stehen;
- **Fig. 7**: eine Anordnung zur Luftführung im Motorraum und
- **Fig. 8**: eine elektronische Steuereinheit mit Beispielen der Belegung von Eingangs- und Ausgangsanschlüssen.

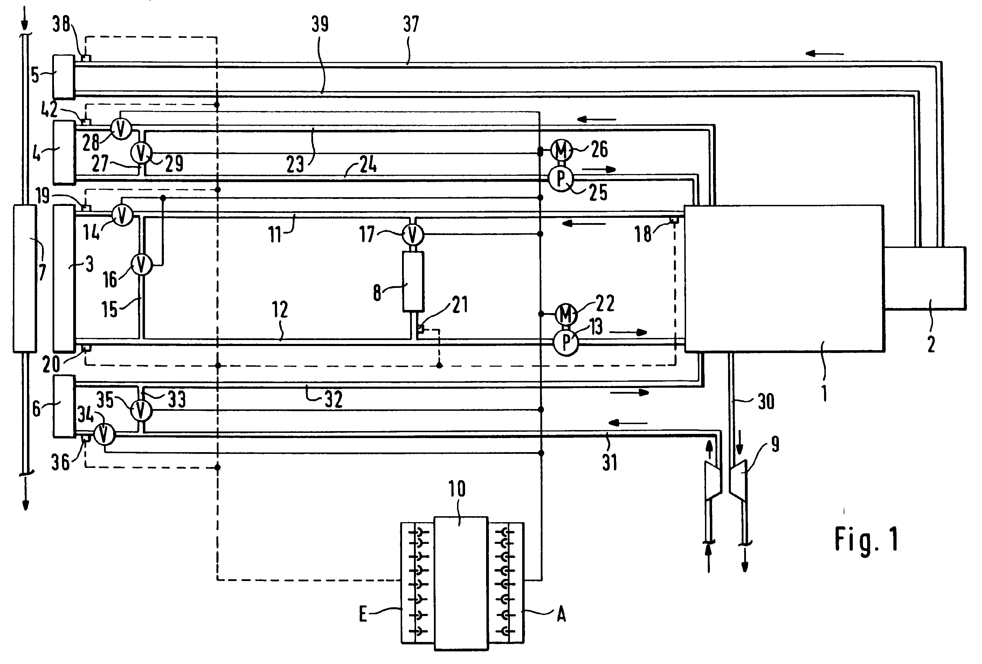

In **Fig. 1** ist ein Verbrennungsmotor 1 mit einem daran angebauten Getriebe 2 gezeigt. Von dem Verbrennungsmotor 1 führt eine Kühlmittelleitung 11 zu einem Wärmetauscher 3, der als Kühlmittel/Luft-Wärmetauscher ausgeführt ist. Der Ausgangsanschluß des Wärmetauschers 3 ist durch eine Kühlmittelleitung 12 mit dem Verbrennungsmotor 1 verbunden, wobei in diese Kühlmittelleitung eine drehzahlgesteuerte Wasserpumpe 13 geschaltet ist. Vor dem Eingangsanschluß des Wärmetauschers 3 ist in die Kühlmittelleitung 11 ein Ventil 14 geschaltet, vor dem - in Strömungsrichtung des Kühlmittels gesehen - eine Bypassleitung, in die ebenfalls ein Ventil 16 geschaltet ist, abzweigt. Mit Hilfe der Ventile 14 und 16 kann der Kühlmittelstrom durch den Wärmetauscher 3 bzw. die Bypassleitung 15 beeinflußt werden.

An die Kühlmittelleitungen 11 und 12 ist außerdem ein Heizkörper 8 für eine Fahrzeugheizung angeschlossen, der mit einem Ventil 17 zur Steuerung der, den Heizkörper beaufschlagenden, Kühlmittelmenge versehen ist. In unmittelbarer Nähe des Ausgangsanschlusses für das Kühlmittel am Verbrennungsmotor 1 ist ein Temperaturfühler 18 angeordnet; ein weiterer Temperaturfühler 19 befindet sich am Eingangsanschluß des Wärmetauschers 3 und ein weiterer Temperaturfühler 20 ist am Ausgangsanschluß des Wärmetauschers 3 vorgesehen. Gemäß der Darstellung in Fig. 1 ist auch dem Heizkörper 8 ein Temperaturfühler 21 zugeordnet, der ebenso wie die Temperaturfühler 18 bis 20 über elektrische Anschlußleitungen mit den Eingangsklemmen E einer zentralen Steuereinheit 10 verbunden sind. Die Ventile 14, 16 und 17 sind beispielsweise mit einem elektromechanischen Antrieb ausgerüstet und werden von der zentralen Steuereinheit 10, mit dessen Ausgangsklemmen A sie durch elektrische Leitungen verbunden sind, angesteuert. Ebenso ist an die Ausgangsklemmen A der zentralen Steuereinheit 10 ein Betätigungselement zur Einstellung der Drehzahl der Wasserpumpe 13 angeschlossen. Dieses Betätigungselement kann beispielsweise ein elektrischer Antriebsmotor 22 sein.

Das Öl zur Schmierung des Verbrennungsmotors 1 wird durch eine Ölleitung 23 zum Eingangsanschluß eines Ölkühlers 4, der als Öl/Luft-Kühler ausgeführt ist, geleitet, von dessen Ausgangsanschluß eine Ölleitung 24 zurück zum Verbrennungsmotor 1 führt. Zur Erzeugung einer entsprechenden Ölströmung ist in der Ölleitung 24 eine Ölpumpe 25 vorgesehen, die von einem Elektromotor 26 angetrieben wird. Der Ölkühler 4 ist mit einem Bypass 27 und mit Ventilen 28 und 29 versehen, so daß bedarfweise die Ölmenge, die durch den Ölkühler 4 oder den Bypass 27 fließt, gesteuert werden kann. Dies geschieht im wesentlichen in Abhängigkeit eines Temperaturfühlers 42, der am Eingangsanschluß des Ölkühlers 4 angeordnet ist. Wie aus Fig. 1 ersichtlich, sind die Ventile 28 und 29 mit den Eingangsklemmen E und der Elektromotor 26 mit den Ausgangsklemmen A der zentralen Steuereinheit 10 verbunden.

Ein Abgasturbolader 9 ist über eine Abgasleitung 30 mit dem Verbrennungsmotor 1 verbunden. Die dem Verbrennungsmotor 1 zugeführte Luft wird im Abgasturbolader komprimiert und über eine Ladeluftleitung 31 einem Ladeluftkühler 6 zugeführt. Vom Ladeluftkühler 6, der als Ladeluft-Luft-Wärmetauscher ausgeführt ist, führt eine Leitung 32 zum Verbrennungsmotor 1. Es ist ferner ein den Ladeluftkühler 6 überbrückender Bypass mit entsprechenden Ventilen 34 und 35 zur jeweiligen Steuerung der Luft durch den Ladeluftkühler 6 und den Bypass 33 vorgesehen. Ein Temperaturfühler 36 ist in unmittelbarer Nähe des Ladeluftkühlers 6 angeordnet und mit den Eingangsklemmen E der zentralen Steuereinheit 10 verbunden. Die Ventile 34 und 35 sind mit solchen Betätigungsmitteln versehen, wie sie bereits zu den Ventilen 16 und 17 beschrieben wurden, und sind an die Ausgangsklemmen A der zentralen Steuereinheit 10 geschaltet.

Von dem Getriebe 2 führt eine Getriebeölleitung 37 zu einem Wärmetauscher 5, der als Öl/Luft-Kühler ausgebildet ist. In unmittelbarer Nähe des Wärmetauschers 5 ist an der Getriebeölleitung 37 ein Temperaturfühler 38 angeordnet, der an die Eingangsklemmen E der zentralen Steuereinheit 10 angeschlossen ist. Von dem Wärmetauscher 5 führt eine zweite Getriebeölleitung 39 zurück zm Getriebe 2.

Fig. 1 zeigt außerdem einen Kondensator 7 eines Kältemittelkreilaufs für eine Kraftfahrzeugklimaanlage, wobei ein solcher Kondensator 7 üblicherweise eine Baueinheit mit dem Wärmetauscher 3 für das Kühlmittel des Verbrennungsmotors 1 bildet. Ebenso sind die Wärmetauscher 4, 5 und 6 in unmittelbarer Nähe des Wärmetauschers 3 angeordnet, was häufig aus Gründen der Kühlluftführung zweckmäßig erscheint. Eine solche räumliche Zuordnung ist jedoch nicht zwingend und kann je nach Konzeption des Fahrzeugs variiert werden.

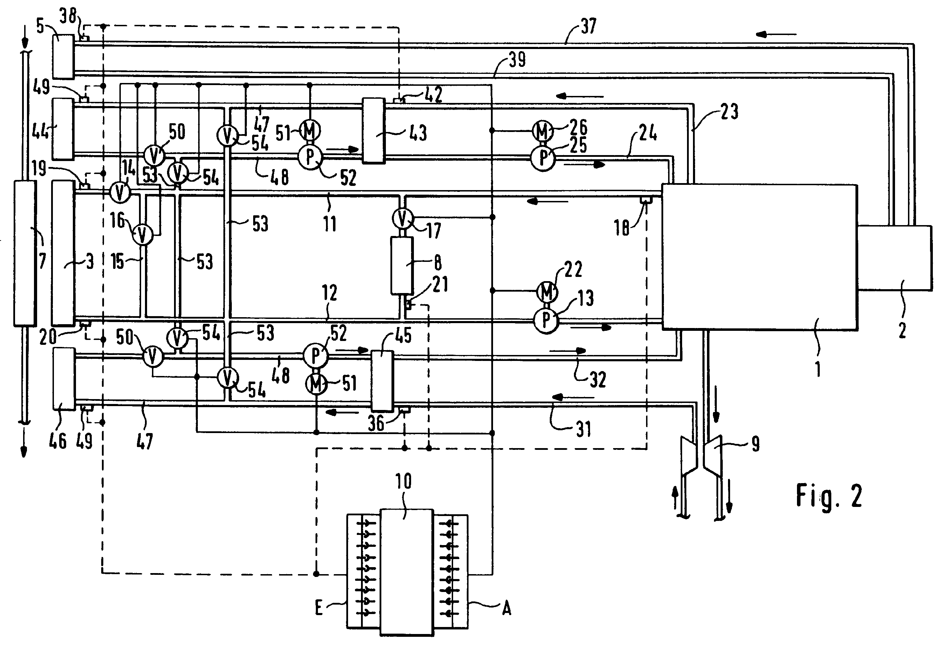

In **Fig. 2** ist eine Kühlanlage dargestellt, die teilweise mit der in Fig. 1 beschriebenen übereinstimmt. Für gleiche Teile der Kühlanlage sind die Bezugszeichen ebenfalls gleich, so daß nachfolgend nur auf die unterschiedlichen Ausführungen der bereits beschriebenen Kühlanlage eingegangen wird. Wie aus Fig. 2 zu ersehen ist, ist an die Ölleitungen 23 und 24 des Kühlkreislaufs für das Motoröl ein Zwischenwärmetauscher 43 angeschlossen, der andererseits von einem Kühlmittel beaufschlagt ist. Der Zwischenwärmetauscher 43 steht über Kühlmittelleitungen 47 und 48 mit einem Zusatzwärmetauscher 44 in Verbindung, wobei dem Zusatzwärmetauscher 44 benachbart ein Temperaturfühler 49 zugeordnet ist und und in der Kühlmittelleitung 48 ein Ventil 50 und eine von einem Motor 51 angetriebene Pumpe 52 vorgesehen sind. Die Kühlmittelleitungen 47 und 48 stehen über Verbindungsleitungen 53, die mittels Ventilen 54 absperrbar sind, mit den Kühlmittelleitungen 11 und 12 des Hauptkühlkreislaufs in Verbindung.

An die Ladeluft 31 und die Verbindungsleitung 32 ist ein Zwischenwärmetauscher 45 angeschlossen, der andererseits wiederum vom Kühlmittel beaufschlagt ist. Dieser Zwischenwärmetauscher 45 ist auf die gleiche Weise an einen Zusatzwärmetauscher 46 angeschlossen, wie der bereits beschriebene Zwischenwärmetauscher 43 an den diesem zugeordneten Zusatzwärmetauscher 44, d.h. auch zwischen dem Zwischenwärmetauscher 45 und dem Zusatzwärmetauscher 46 befinden sich Kühlmittelleitungen 47 und 48, ein Temperaturfühler 49, ein Ventil 50 und eine mit einem Motor 51 versehene Pumpe 52. Außerdem sind Verbindungsleitungen 53 mit Absperrventilen 54 vorgesehen. Aufgrund der Anordnung der Ventile 50 und 54 kann wahlweise der Kühlmittelkreislauf zwischen den Wärmetauschern 43 und 44 bzw. 45 und 46 separat betrieben oder an den Hauptkühlkreislauf des Verbrennungsmotors 1 angeschlossen werden. Die Steuerung der jeweiligen Ventile 50 und 54 und die Einstellung der Leistung der Pumpen 52 wird daher in Abhängigkeit der von den Temperaturfühlern 19, 36, 42 und 49 erfaßten aktuellen Temperaturwerten erfolgen.

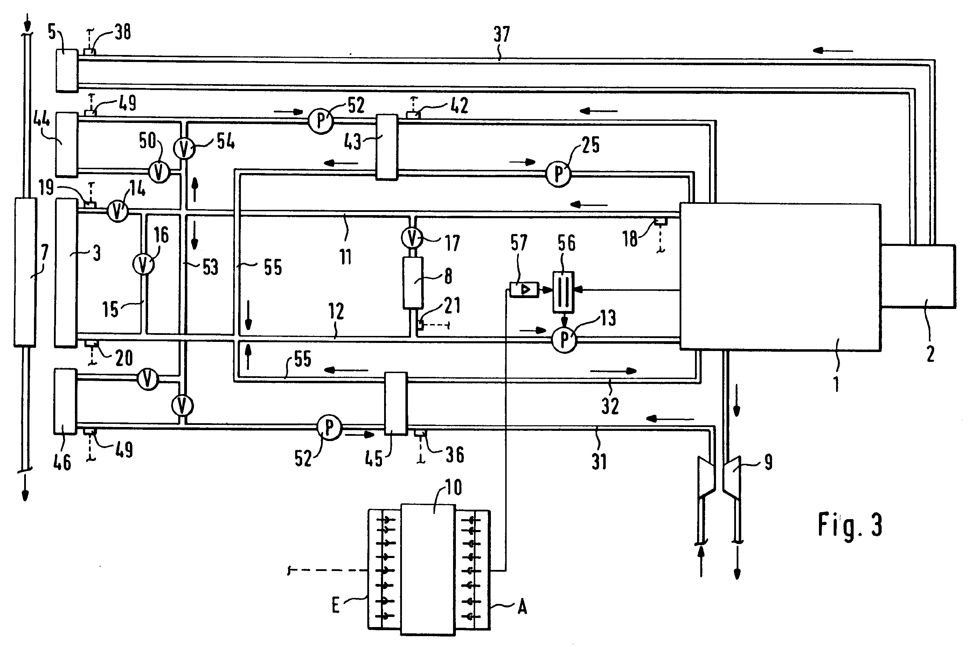

In **Fig. 3** ist eine Ausführungsvariante zur Fig. 2 gezeigt, bei der die Zwischenwärmetauscher 43 und 45 jeweils eine Kühlmittelleitung 55 besitzen, durch die sie ständig mit dem Hauptkühlkreislauf des Verbrennungsmotors verbunden sind. Mittels der Ventile 50 und 54 kann der Durchfluß von Kühlmittel durch die Zusatzwärmetauscher 44 und 46 und die Zwischenwärmetauscher 43 und 45 gesteuert werden. Sofern die Wasserpumpe 13 des Kühlmittelkreislaufs den Kühlleistungsbedarf für die Zwischenwärmetauscher 43 und 45 nicht in allen Betriebszuständen zu decken vermag, können die Verbindungsleitungen 48 mit Kühlmittelpumpen 52 ausgestattet sein. Alternativ zu den bereits beschriebenen elektromotorischen Antrieben der Wasserpumpe 13 ist in Fig. 3 gezeigt, daß der Pumpenantrieb auch vom Verbrennungsmotor 1 erfolgen kann, wobei zwischen die Abtriebswelle des Verbrennungsmotors 1 und die Wasserpumpe 13 eine drehzahlgesteuerte Kupplung 56 geschaltet ist, die von einem Leistungsverstärker 57 in Abhängigkeit der Ausgangssignale der Steuereinheit 10 betrieben wird.

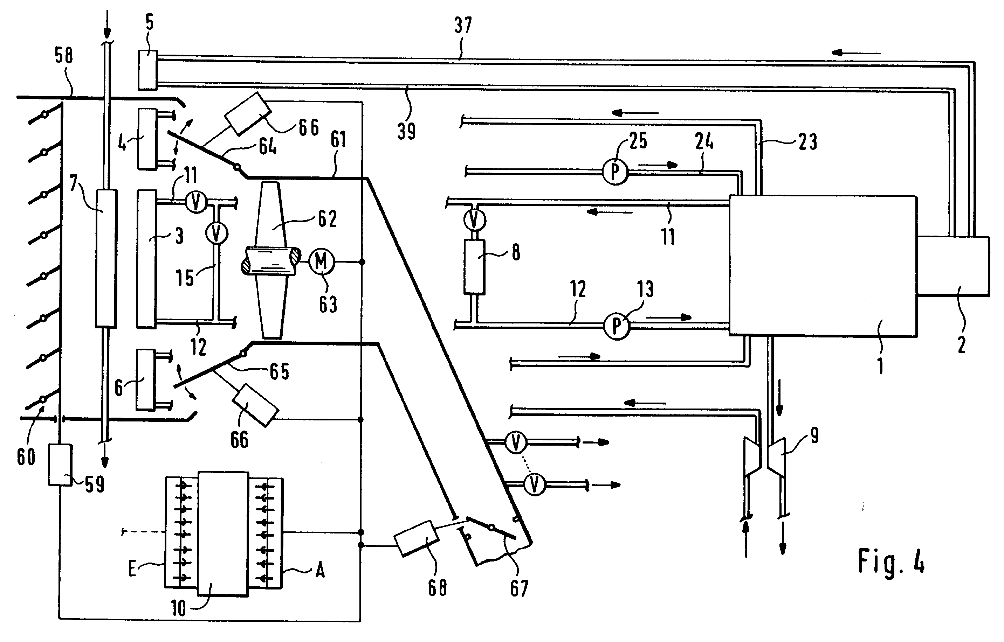

**Fig. 4** zeigt eine Kühlanlage gemäß Fig. 1 mit den zugehörigen Luftführungs- und Steuermitteln. Für gleiche Komponenten stimmen die Bezugszeichen jeweils mit denjenigen der Fig. 1 überein. Aus Fig. 4 ist ersichtlich, daß eine den Kondensator 7 und die Wärmetauscher 3, 4 und 6 umgebende erste Zarge 58 vorgesehen ist, an der eingangsseitig eine von einem Stellglied 59 betätigbare Jalousie 60 angeordnet ist. In Luftströmungsrichtung, hinter der Wärmetauscheranordnung 3, 4 und 6, gesehen, befindet sich eine zweite Zarge 61, die einen drehzahlgeregelten Lüfter 62 mit Antriebsmotor 63 umgibt. In einem Übergangsbereich zwischen der Wärmetauscheranordnung 3, 4, 6 und der zweiten Zarge 61 sind zwei verschwenkbare Klappen 64 und 65 vorgesehen, die jeweils von einem Stellglied 66 betätigbar sind und als verstellbares Luftführungselement dienen. Es kann damit erreicht werden, daß die bereitgestellte Lüfterleistung ausschließlich dem Kondensator 7 und dem Wärmetauscher 3 zugute kommt, wenn beispielsweise für die Kühlung des Motoröls oder der Ladeluft keine Leistung benötigt wird oder der Staudruck hierfür ausreicht.

Stromab des Lüfters 62 können bei Bedarf noch Luftführungskanäle zu Zusatzkühleinrichtungen angeschlossen sein. Außerdem ist es möglich, den Kühlluftstrom ausgangsseitig zu steuern oder abzusperren, wofür eine von einem Stellglied 68 betätigbare Klappe 67 vorgesehen ist. Die Stellglieder 59, 66 und 68 sind vorzugsweise elektrische Schrittmotoren oder Regelmagnete, die unter Zwischenschaltung von Leistungsverstärkern an die Ausgänge der zentralen Steuereinheit 10 angeschlossen sind.

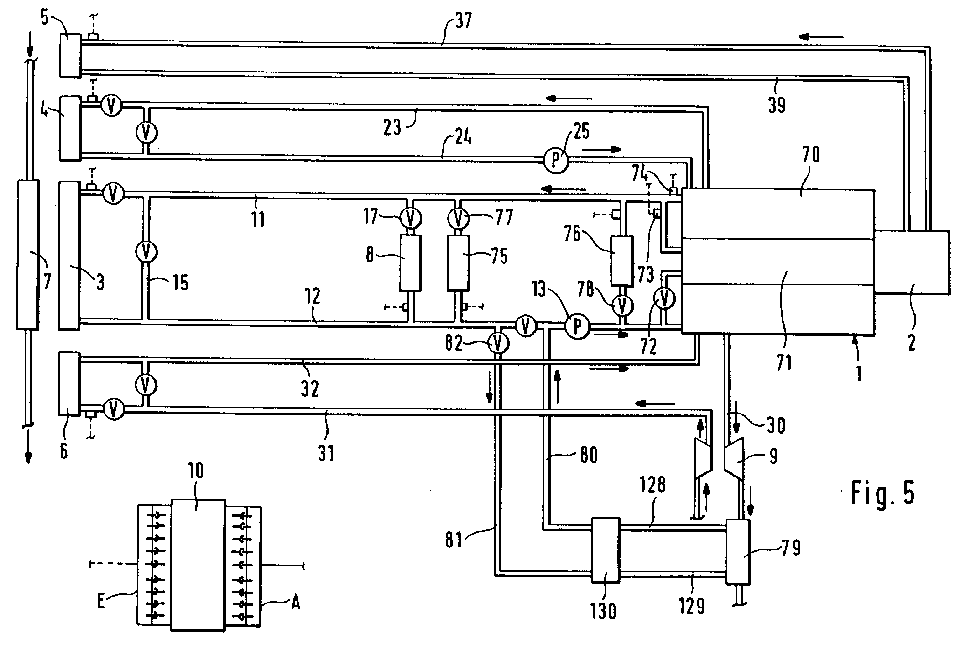

In **Fig. 5** ist eine Kühlanlage dargestellt, bei der der Verbrennungsmotor 1 bzgl. seiner Kühlmitteldurchströmung in zwei separate Teilströme unterteilt ist, nämlich einerseits in einen Strom für den Motorblock 70 und andererseits in einen Teilstrom für den Zylinderkopf 71. Die Verzweigung dieser beiden Teilströme kann unmittelbar vor dem Anschluß der Kühlmittelleitung 12 am Verbrennungsmotor 1 erfolgen, wobei in den Anschlüssen für die Teilströme Ventilmittel 72 vorgesehen sind. Die Ausgangstemperaturen des Kühlmittels beider Teilströme werden separat von Temperaturfühlern 73 und 74 erfaßt.

In Fig. 5 sind außerdem noch Kühlmittelzweige für Zusatzheizungen 75 und Zusatzkühleinrichtungen 76 vorgesehen. Diese Zusatzheizungen 75 und Zusatzküleinrichtungen 76 sind strömungsmäßig parallel zum Wärmetauscher 3 oder dem Heizkörper 8 angeordnet und jeweils über Ventile 77 bzw. 78 steuerbar.

Der den Turbolader 9 verlassende Abgasstrom wird durch einen Wärmetauscher 79 geleitet, der sekundärseitig von einem Zwischenwärmeträgerfluid beaufschlagt ist, welches durch Verbindungsleitungen 128 und 129 sowie einen Wärmetauscher 130 zirkuliert. Zum Anschluß des Wärmetauschers 79 an den Hauptkühlkreislauf dienen Verbindungsleitungen 80 und 81, wobei in die Verbindungsleitung 81 ein Ventil 82 eingesetzt ist um die Wärmeübetragungsleistung im Wärmetauscher 79 zu steuern. Mit Hilfe des im Abgasstrom angeordneten Wärmetauschers 79 ist es möglich, die Zeitspanne bis zum Erreichen der Betriebstemperatur des Verbrennungsmotors 1 zu verkürzen.

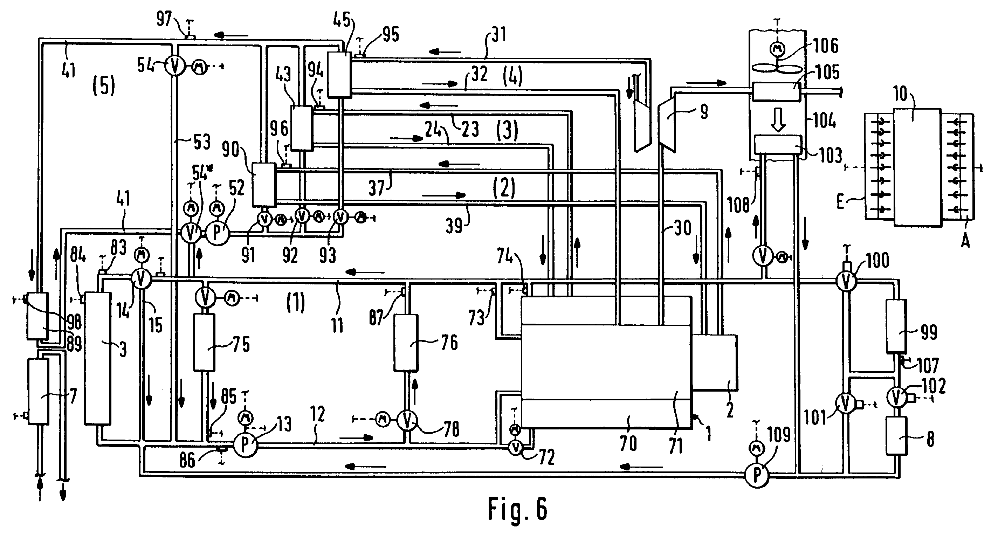

In **Fig. 6** ist der Verbrennungsmotor 1 mit parallel geschalteten Kühlmittelkanälen für den Zylinderkopf 71 und den Motorblock 70 versehen. In der Zuleitung für den Motorblock 70 ist das Ventilmittel 72 angeordnet und an den Austritten der jeweiligen Kanäle sind die Temperaturfühler 73 und 74 vorgesehen. Der Hauptkühlkreislauf umfaßt den Wärmetauscher 3, den Bypass 15 sowie zusätzliche Heizeinrichtungen 75 und zusätzliche Kühleinrichtungen 76 für Nebenaggregate. Die Beaufschlagung der einzelnen Zweige bzw. die Durchflußmenge des Kühlmittels wird durch Ventile 14, 72, 77 und 78 gesteuert. Zur Erfassung der Kühlmittel- und Lufttemperaturen sind an verschiedenen Stellen des Kühlkreislaufs bzw. des Wärmetauschers 3 und des Verbrennungsmotors 1, mehrere Temperaturfühler 19, 73, 74 und 85 bis 87 sowie zur Erfassung weiterer Parameter ein Drucksensor 83, ein Füllstandssensor 84 bzw. 98 und ein Drehzahlsensor 88 vorgesehen, die alle mit den Eingangsanschlüssen der zentralen Steuereinheit 10 verbunden sind.

Ein zweiter Kühlmittelkreislauf, der einen als Kühlmittel/Luft-Kühler ausgebildeten Zusatzwärmetauscher 89 und drei Zwischenwärmetauscher 43, 45 und 90 umfaßt, ist über Anschlußleitungen 53 mit dem Hauptkühlkreislauf verbunden. Im Leitungssystem 41 des zweiten Kühlmittelkreislaufs ist eine von einem Elektromotor 40 angetriebene Pumpe 52 vorgesehen, die bezüglich ihrer Förderleitung ein konstantes oder aber auch variables Volumen und/oder Drehzahl haben kann. Die drei Zwischenwärmetauscher 43, 45 und 90 sind strömungsmäßig jeweils parallel geschaltet und durch separate Ventile 91, 92 und 93 bzgl. ihrer Wärmetauscherleistung einzeln steuerbar.

Der Zwischenwärmetauscher 43 dient zur Kühlung des Motoröls und er ist durch Ölleitungen 23 und 25 mit dem Motorblock 70 verbunden. Die im Verbrennungsmotor 1 integrierte Ölpumpe reicht zur Umwälzung des Öls durch die Ölleitungen 23 und 24 sowie den Zwischenwärmetauscher 43 völlig aus, so daß eine zusätzliche Pumpe entbehrlich ist. Mit dem Bezugszeichen 94 ist der Temperaturfühler für die Öleintrittstemperatur am Zwischenwärmetauscher 43 bezeichnet. Vom Verbrennungsmotor 1 führt eine Abgasleitung 30 zum Turbolader 9, der andererseits Frischluft durch die Ladeluftleitung 31 zu dem Zwischenwärmetauscher 45 fördert. Am Eingang des Zwischenwärmetauschers 45 ist ein Temperaturfühler 95 vorgesehen, der die Eintrittstemperatur der Ladeluft in den Zwischenwärmetauscher 45 erfaßt. An diesen Zwischenwärmetauscher 45 schließt sich eine Verbindungsleitung 32 an, die zu dem Verbrennungsmotor 1 führt. Der Zwischenwärmetauscher 90 dient zur Kühlung des Getriebeöls und er steht zu diesem Zweck mit dem Getriebe 2 über Getriebeölleitungen 37 und 39 in Verbindung. Zur Erfassung der Temperatur des Getriebeöls ist eingangsseitig des Zwischenwärmetauschers 90 ein Temperaturfühler 96 vorgesehen.

Ein weiterer Temperaturfühler 97 ist vor der Abzweigung der Verbindungsleitung 53 vorgesehen. In die Verbindungsleitung 53 ist ein Ventil 54 geschaltet, welches bei bestimmten Kriterien die Verbindung zwischen dem Hauptkühlmittelkreislauf und dem zweiten Kühlmittelkreislauf freigibt. Das Ventil 54 wirkt im Abstimmung mit einem Ventil 54*, so daß eine Komunikation beider Kühlmittelkreisläufe bei besonderen Betriebsbedingungen gegeben ist. Solche Betriebsbedingungen liegen insbesondere bei kaltem Verbrennungsmotor 1 vor, d.h. ist der Anlaufphase der Maschine. Es soll durch die Verbindungsleitungen 53 ereicht werden, daß ein rascher Temperaturanstieg im Kühlmittelkreislauf, beispielsweise wenn dieser mit einem Abgaswärmetauscher 105 oder mit einem Wärmespeicher 99 ausgerüstet ist, auch für den zweiten Kühlmittelkreislauf nutzbar gemacht werden kann. Bei Überschreiten bestimmter Temperaturen oder Temperaturdifferenzen werden die Ventile 54 und 54* wieder geschlossen. Der Zusatzwärmetauscher 89 ist mit einem Füllstandssensor 98 ausgestattet.

An den Hauptkühlkreislauf ist ein Heizungskreislauf einer Kraftfahrzeug-Heizungsanlage angeschlossen, die außer dem Heizkörper 8 auch einen Wärmespeicher 99 umfaßt. Der Wärmespeicher 99 ist derart angeschlossen und mit Ventilmitteln versehen, daß dieser in Serie mit dem Heizkörper 8 oder auch parallel zu diesem betreibbar ist. Selbstverständlich gestatten es die Ventilmittel 100, 101 und 102 auch, den Durchfluß des Kühlmittels durch die Heizungsanlage vollständig zu sperren.

Außerdem ist an den Heizungskreislauf ein weiterer Wärmetauscher 103 angeschlossen, der gemeinsam mit einem Abgaswärmetauscher 105 in einem Luftführungskanal 104 angeordnet ist. Ein Gebläse 106 erzeugt einen Luftstrom durch den Abgaswärmetauscher 105, der dem Abgas die Wärme entzieht um anschließend die Wärme an das durch den Wärmetauscher 103 strömende Kühlmittel abzugeben. Mit den Bezugzszeichen 107 und 108 sind Temperaturfühler im Heizungskreislauf bezeichnet. Um eine ausreichende Zirkulation des Kühlmittels im Heizungskreislauf sicherzustellen, wird eine Pumpe 109 vorgesehen.

Wie Fig. 6 zeigt, sind alle Betätigungsmittel, nämlich Pumpen, Lüfter und dergleichen, mit elektrischen Stellmitteln oder Antrieben versehen, die alle nach den jeweils erfaßten Temperaturwerten und dem daraus berechneten Leistungsbedarf von der zentralen Steuereinheit 10 angesteuert werden.

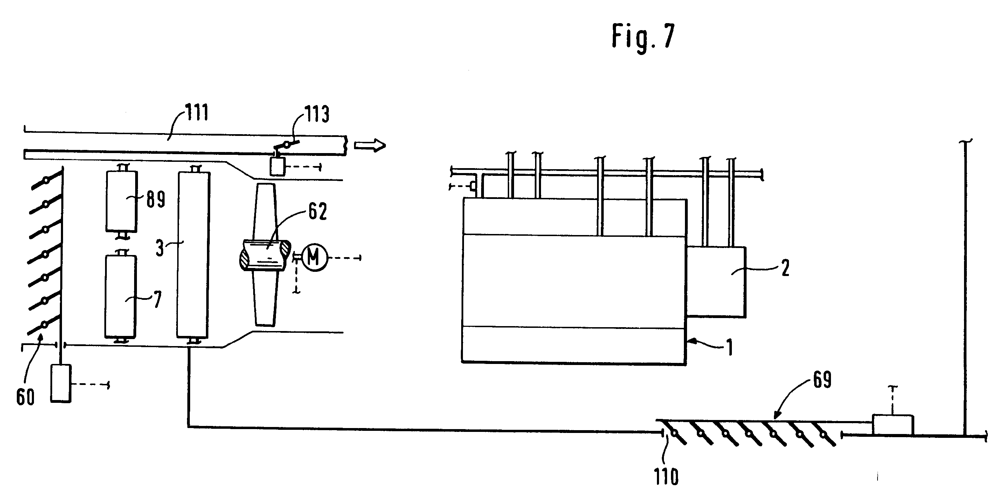

**Fig. 7** zeigt eine Anordnung zur Kühlluftführung unter Einbeziehung des Motorraums, wobei die Kühlluft durch die geöffnete Jalousie 60 zu dem Kondensator 7, dem Zusatzwärmetauscher 89 und dem Wärmetauscher 3, für das Kühlmittel des Verbrennungsmotors 1 gelangt. Stromab des Lüfters 62 tritt die Kühlluft durch den Motorraum und kann an einer mittels einer Jalousie 69 steuerbaren Öffnung 110 zur Umgebungsluft austreten. Die Öffnung 110 wird je nach Bedarf teilweise oder vollständig durch die Jalousie 69 verschlossen. Fig. 7 zeigt darüberhinaus die Anordnung eines separaten Frischluftkanals, durch den, unabhängig von der Wärmetauscheranordnung, Frischluft in den Motorraum einströmen kann, wobei diese Frischluft gezielt dem Zylinderkopf, dem Turbolader oder der Lichtmaschine zugeführt werden kann. In diesem zusätzlichen Luftführungskanal 111 ist eine von einem Stellmagnet angetriebene Klappe 113 angeordnet.

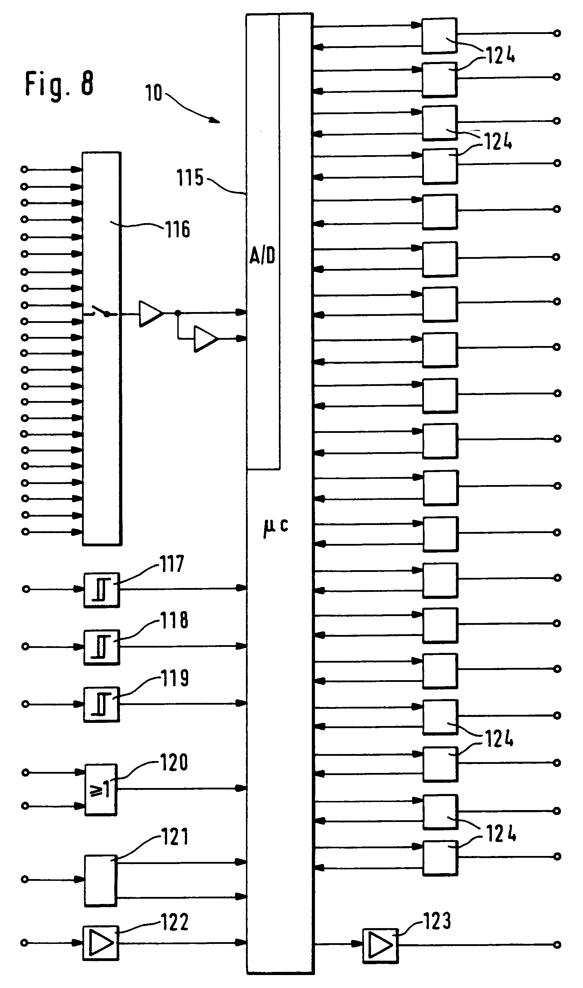

In **Fig. 8** ist ein Blockschaltbild der zentralen Steuereinheit 10 mit Beispielen möglicher Eingangsparameter und ansteuerbarer Betätigungs- oder Stellmittel dargestellt. Die zentrale Steuereinheit 10 umfaßt einen Mikroprozessor 14 sowie einen Analog/Digital-Umsetzer 115, vor dessen Eingang ein Multiplexer 116 geschaltet ist.

Dieser Multiplexer hat eine Vielzahl von Eingängen, die mit den in den Fig. 1 bis 6 angegebenen Temperaturfühlern verbunden sind. Es sind dies die Temperaturfühler für das den Motorblock verlassende Kühlmittel, für das den Zylinderkopf verlassende Kühlmittel, das Kühlmittel bei Eintritt in den Wärmetauscher 3, die Temperatur des Kühlmittels im Zweig der Zusatzheizungen, die Temperatur des Kühlmittels im Zweig der Kühleinrichtungen von Nebenaggregaten, die Temperatur im Wärmespeicher, die Temperatur des Motoröls, der Ladeluft und des Getriebeöls sowie gegebenenfalls der Temperatur des Zwischenwärmeträgermediums. Darüber hinaus werden dem Multiplexer 116 der Druck des Kühlmittels am Eingang des Wärmetauschers 3 und der Wert von Füllstandssensoren zugeführt.

Die Drehzahl der Lüfter, die Drehzahl der Wasserpumpe 13 und die Drehzahl des Verbrennungsmotors 1, werden über Komperatoren 117, 118 und 119, die bei Überschreiten eines bestimmten Schwellwertes ihr Ausgangssignal ändern, der zentralen Steuereinheit 10 zugeführt. In einem Eingang 120 wird festgestellt, ob die Zündung oder ein bestimmter Zustand der Zentralveriegelung eingeschaltet ist, was zur Aktiverung des Wärmespeichers im Hinblick auf die Abgabe des Wärmeinhalts führt. Die Batteriespannung ist über das Schaltglied 121 an die zentrale Steuereinheit 10 gelegt. Für eine Testfunktion ist ein Eingangsverstärker 122 des Testsignals vorgesehen. Für das entsprechende Diagnosesignal ist ein Ausgangsverstärker 123 vorhanden.

Die Ausgänge der zentralen Steuereinheit 10 sind mit Treiberstufen (Leistungsverstärkern) beschaltet, die jeweils mit einer Rückführleitung zur Meldung der ordnungsgemäßen Funktion der jeweiligen Treiberstufe versehen sind. Sämtliche Treiberstufen in Fig. 8 haben das Bezugszeichen 124; sie dienen jedoch zu unterschiedlichen Betätigungen, beispielsweise zum Einstellen der Jalousien, zum Einstellen der Ventile der verschiedenen Kühlkreisläufe, beispielsweise Kühlmittelkühler, Heizung, Ladeluft, Motoröl, Getriebeöl und zum Einstellen der jeweiligen Antriebsdrehzahlen für die Fluidpumpen und Gebläse.

## Patentansprüche

1. Kühlanlage für Fahrzeuge mit Verbrennungsmotor (1), die mehrere Kühlkreisläufe mit diesen zugeordneten Wärmetauschern (3, 4, 5, 6) umfaßt und mit in den jeweiligen Kühlkreisläufen angeordneten Temperaturfühlern (18 bis 21) die mit einer elektrischen Schalteinrichtung (10) verbunden sind und die Schalteinrichtung- mit Betätigungselementen (13, 14, 16, 28, 29) in Verbindung steht, die die Leistung der Wärmetauscher in Abhängigkeit der Signale der Temperaturfühler steuert, wobei eine zentrale Steuereinheit (10), die mindestens einen Mikroprozessor (114) umfaßt, vorgesehen ist, durch die der Kühlleistungsbedarf der einzelnen Kühlkreisläufe in Abhängigkeit der Signale der Temperaturfühler (18 bis 21, 36, 38, 42, 49, 73, 74, 85 bis 87, 94 bis 97) bestimmbar ist, und jedem Kühlkreislauf Betätigungsmittel (13, 14, 16, 28, 29, 34, 35, 91 bis 93, 100 bis 102, 108) zur individuellen Beeinflussung der Leistung des betreffenden Wärmetauschers (3, 4, 5, 6) zugeordnet sind, **dadurch gekennzeichnet,** daß von den Kühlkreisläufen ein erster zur Kühlung des Motorkühlmittels, ein zweiter zur Kühlung des Motoröls und ein dritter zur Kühlung der Ladeluft bestimmt ist, und daß an den Motorkühlkreislauf ein leistungsgeregelter Heizkörper (8) einer Fahrzeug-Heizungsanlage angeschlossen ist, und dem Heizkörper (8) ein Ventil (17, 102) sowie ein Temperaturfühler (21) zugeordnet sind, wobei der Temperaturfühler (21) mit den Eingangsklemmen (E) und das Ventil (17) mit den Ausgangsklemmen (A) der Steuereinheit (10) verbunden sind.

2. Kühlanlage nach Anspruch 1, **dadurch gekennzeichnet,** daß als Betätigungsmittel eine drehzahlgesteuerte Pumpe (13, 25, 109) vorgesehen und ein elektrisch ansteuerbares Ventil ( 14, 16, 17, 28, 29, 34, 35, 50, 54, 72, 77, 78, 82, 91 bis 93, 100 bis 102, 108) vorgesehen ist.

3. Kühlanlage nach Anspruch 2, **dadurch gekennzeichnet,** daß neben dem Kühler (3) für das Motorkühlmittel mindestens einem weiteren Wärmetauscher (4, 6) ein ventilgesteuerter Bypass (27, 33) zugeordnet ist.

4. Kühlanlage nach Anspruch 2 und 3, **dadurch gekennzeichnet,** daß mindestens ein Kühlkreislauf mit einer drehzahlgesteuerter Pumpe (13, 25) und einem ventilgesteuerten Bypass (15, 27) ausgestattet ist.

5. Kühlanlage nach einem der vorhergehenden Ansprüche, **dadurch** **gekennzeichnet**, daß für den Motorblock (70) und den Zylinderkopf (71) jeweils ein separater Kühlmittelzulauf und Kühlmittelablauf vorgesehen sind und mindestens einer dieser Kühlmittelanschlüsse mittels eines Ventils (72) drossel- oder absperrbar ist.

6. Kühlanlage nach einem der vorhergehenden Ansprüche, **dadurch** **gekennzeichnet**, daß ein Kühlkreislauf (5, 37, 39,) für das Getriebeöl vorgesehen ist.

7. Kühlanlage nach einem der vorhergehenden Ansprüche, **dadurch** gekennzeichnet, daß in die Kühlkreisläufe für das Motoröl und/oder die Ladeluft und/oder das Getriebeöl ein Zwischenwärmetauscher (43, 45, 90) eingesetzt ist, der von einem Zwischenträgermedium beaufschlagt ist, wobei vorzugsweise als Zwischenwärmeträgermedium ein Kühlmittel benutzt nutzt wird, das hinsichtlich seiner Konsistenz demjenigen des Motorkühlkreislaufs entspricht.

8. Kühlanlage nach Anspruch 7, **dadurch gekennzeichnet,** daß für das Motorkühlmittel mindestens zwei strömungsmäßig parallel geschaltete Wärmetauscher (3, 44, 46) vorgesehen und in die Verbindungsleitungen (53) dieser Wärmetauscher (3, 44, 46) und/oder der Zwischenwärmetauscher (43, 45) Ventilmittel (54) geschaltet sind und in den Kühlmittelanschlußleitungen (48) der Zwischenwärmetauscher (43, 45) drehzahlgesteuerte Pumpen (52) vorgesehen sind.

9. Kühlanlage nach einem der vorhergehenden Ansprüche, **da****durch gekennzeichnet,** daß in der Abgasleitung des Verbrennungsmotors (1) ein Abgaswärmetauscher ( 79, 105) angeordnet ist, der strömungsmäßig einem Turbolader (9) nachgeordnet ist, wobei vorzugsweise der Abgaswärmetauscher (105) sekundärseitig von einem mittels eines Gebläses erzeugten Luftstroms beaufschlagt ist und der Luftstrom einem vom Kühlmittel des Motorkühlkreislaufs durchströmten Wärmetauscher (103) zugeführt wird.

10. Kühlanlage nach einem der vorhergehenden Ansprüche, **da****durch gekennzeichnet,** daß an den leistungsgeregelten Heizkörper (8) einer Fahrzeugheizungsanlage ein Wärmespeicher (99) angeschlossen ist, wobei der Wärmespeicher (99) in Serie mit dem Heizkörper (8) oder diesen umgehend schaltbar oder vollständig absperrbar ist.

11. Kühlanlage nach Anspruch 1, **dadurch gekennzeichnet,** daß zusätzlich Heizeinrichtungen (75) für Nebenaggregate an den Kühlmittelkreislauf angeschlossen sind.

12. Kühlanlage nach einem der vorhergehenden Ansprüche, **dadurch** **gekennzeichnet**, daß mindestens eine absperrbare Kühlmittelleitung des Motorkühlkreislaufs zur Kühlung von Nebenaggregaten (76) vorgesehen ist.

13. Kühlanlage nach einem der vorhergehenden Ansprüche, **dadurch** **gekennzeichnet**, daß den kühlluftbeaufschlagten Wärmetauschern (3, 4, 6, 7, 44, 46) mindestens ein drehzahlgesteuerter Lüfter (62) zugeordnet ist, wobei zum Antrieb des Lüfters (62) ein Elektromotor (63), eine Flüssigkeitsreibungskupplung oder ein hydrostatischer Antrieb dient.

14. Kühlanlage nach Anspruch 13, **dadurch gekennzeichnet,** daß die Drehzahl des Lüfters (62) in Abhängigkeit von Ausgangssignalen der zentralen Steuereinheit (10) regelbar ist.

15. Kühlanlage nach Anspruch 13, **dadurch gekennzeichnet,** daß im Luftströmungsweg eine Jalousie (60) angeordnet ist, die in Abhängigkeit von Ausgangssignalen der zentralen Steuereinheit (10) steuerbar ist, wobei mindestens ein Wärmetauscher (4, 6) mit einer steuerbaren Luftwegweiche (64, 65) versehen ist oder der Luftströmungsweg abströmseitig der Wärmetauscheranordnung absperrbar ist.

16. Kühlanlage nach Anspruch 15, **dadurch gekennzeichnet,** daß ein separater Luftführungskanal ( 111) zur gezielten Beaufschlagung bestimmter Aggregate im Motorraum mit Kühlluft vorgesehen ist.

17. Kühlanlage nach einem der vorhergehenden Ansprüche, **dadurch** **gekennzeichnet**, daß außer mehreren Temperaturfühlern mindestens ein Druckfühler (83), ein Füllstandssensor (84, 98) und/oder ein Drehzahlsensor (88) für die Drehzahl der Kurbelwelle des Verbrennungsmotors (1) vorgesehen sind.

## Claims

1. Cooling system for vehicles having an internal combustion engine (1) and which comprises a plurality of cooling circuits with heat exchangers (3, 4, 5, 6) which are associated with said internal combustion engine (1) and with temperature sensors (18 to 21) which are disposed in the respective cooling circuits and are connected to an electrical switching device (10) and the switching device is connected to actuating elements (13, 14, 16, 28, 29) which control the output of the heat exchangers in dependence on the signals from the temperature sensors, a central control unit (10), which comprises at least one microprocessor (114), being provided by means of which the cooling output requirement of the individual cooling circuits can be determined in dependence on the signals from the temperature sensors (18 to 21, 36, 38, 42, 49, 73, 74, 85 to 87, 94 to 97), and actuating means (13, 14, 16, 28, 29, 34, 35, 91 to 93, 100 to 102, 108) for individually influencing the output of the relevant heat exchanger (3, 4, 5, 6) being associated with each cooling circuit,
characterised in that, of the cooling circuits, a first cooling circuit is intended to cool the engine coolant, a second is intended to cool the engine oil and a third is intended to cool the charging air; and in that a performance-controlled radiator (8) of a vehicle heating system is connected to the engine cooling circuit, and a valve (17, 102) and a temperature sensor (21) are associated with the radiator (8), the temperature sensor (21) being connected to the input terminals (E) and the valve (17) being connected to the output terminals (A) of the control unit (10).

2. Cooling system according to Claim 1, characterised in that a rotational speed-controlled pump (13, 25, 109) and an electrically controllable valve (14, 16, 17, 28, 29, 34, 35, 50, 54, 72, 77, 78, 82, 91 to 93, 100 to 102, 108) are provided as actuating means.

3. Cooling system according to Claim 2, characterised in that a valve-controlled bypass (27, 33) is associated with at least one further heat exchanger (4, 6) in addition to the cooler (3) for the engine coolant.

4. Cooling system according to Claim 2 and Claim 3, characterised in that at least one cooling circuit is equipped with a rotational speed-controlled pump (13, 25) and a valve-controlled bypass (15, 27).

5. Cooling system according to any one of the preceding claims, characterised in that a separate coolant delivery and coolant discharge are provided in each case for the engine block (70) and the cylinder head (71) and at least one of these coolant connections can be throttled or blocked by means of a valve (72).

6. Cooling system according to any one of the preceding claims, characterised in that a cooling circuit (5, 37, 39) is provided for the gear oil.

7. Cooling system according to any one of the preceding claims, characterised in that an intermediate heat exchanger (43, 45, 90), which is acted upon by an intermediate carrier medium, is used in the cooling circuits for the engine oil and/or the charging air and/or the gear oil, a coolant which corresponds in terms of its consistency to that of the engine cooling circuit preferably being used as the intermediate heat carrier medium.

8. Cooling system according to Claim 7, characterised in that at least two heat exchangers (3, 44, 46) which are connected in parallel in terms of flow are provided for the engine coolant and valve means (54) are connected into the connection lines (53) of these heat exchangers (3, 44, 46) and/or of the intermediate heat exchangers (43, 45), and rotational speed-controlled pumps (52) are provided in the coolant connection lines (48) of the intermediate heat exchangers (43, 45).

9. Cooling system according to any one of the preceding claims, characterised in that an exhaust gas heat exchanger (79, 105) downstream of which a turbocharger (9) is disposed in terms of flow is disposed in the exhaust gas line of the internal combustion engine (1), the exhaust gas heat exchanger (105) preferably being acted upon from the secondary side by an airstream generated by a fan and the air stream being delivered to a heat exchanger (103) through which coolant from the engine cooling circuit flows.

10. Cooling system according to any one of the preceding claims, characterised in that a heat accumulator (99) is connected to the performance-controlled radiator (8) of a vehicle heating system, it being possible for the heat accumulator (99) to be connected in series with the radiator (8) or completely blocked or so as to bypass the latter.

11. Cooling system according to Claim 1, characterised in that additional heating devices (75) for auxiliary units are connected to the cooling circuit.

12. Cooling system according to any one of the preceding claims, characterised in that at least one blockable coolant line of the engine cooling circuit is provided for cooling auxiliary units (76).

13. Cooling system according to any one of the preceding claims, characterised in that at least one rotational speed-controlled ventilator (62) is associated with the heat exchangers (3, 4, 6, 7, 44, 46) which are acted upon by cooling air, an electric motor (63), a fluid friction coupling or a hydrostatic drive being used to drive the ventilator (62).

14. Cooling system according to Claim 13, characterised in that the rotational speed of the ventilator (62) can be regulated in dependence of output signals of the central control unit (10).

15. Cooling system according to Claim 13, characterised in that a louvre (60) is disposed in the air flow path and can be controlled in dependence on output signals from the central control unit (10), at least one heat exchanger (4, 6) being provided with a controllable air path deflection device (64, 65) or it being possible for the air flow path to be blocked on the outflow side of the heat exchanger arrangement.

16. Cooling system according to Claim 15, characterised in that a separate air guide duct (111) for purposefully acting upon specific units in the engine compartment with cooling air is provided.

17. Cooling system according to any one of the preceding claims, characterised in that, in addition to a plurality of temperature sensors, at least one pressure sensor (83), a filling level sensor (84, 98) and/or a rotational speed sensor (88) for the rotational speed of the crankshaft of the internal combustion engine (1) are provided.

## Revendications

1. Système de refroidissement pour véhicule automobile à moteur à combustion interne (1), qui comporte plusieurs circuits de refroidissement avec des échangeurs de chaleur (3, 4, 5, 6) associés à ceux-ci et avec des sondes de température (18 à 21), placées dans chacun des circuits de refroidissement, qui sont reliées à un dispositif de commutation (11) électrique et le dispositif de commutation est relié à des éléments d'actionnement (13, 14, 16, 28, 29), lequel système de refroidissement commande la puissance des échangeurs de chaleur en fonction des signaux des sondes de température, une unité de commande centrale (10), qui comporte au moins un microprocesseur (114), étant prévue pour déterminer les besoins en puissance de refroidissement des différents circuits en fonction des signaux des sondes de température (18 à 21, 36, 38, 42, 49, 73, 74, 85 à 87, 94 à 97), et à chaque circuit de refroidissement étant associés des moyens d'actionnement (13, 14, 16, 28, 29, 34, 35, 91 à 93, 100 à 102, 108), pour influencer individuellement la puissance de l'échangeur de chaleur (3, 4, 5, 6) concerné, caractérisé en ce qu'un premier des circuits de refroidissement est destiné à refroidir le réfrigérant du moteur, un second est destiné à refroidir l'huile du moteur et un troisième à refroidir l'air de charge, et en ce qu'au circuit de refroidissement du moteur est raccordé un corps de chauffage 8 de puissance réglable, d'un système de chauffage du véhicule, et au corps de chauffage (8) sont associées une soupape (17, 102) ainsi qu'une sonde de température (21), la sonde de température (21) étant reliée aux bornes d'entrée (E) et la soupape (17) aux bornes de sortie (A) de l'unité de commande (10).

2. Système de refroidissement selon la revendication 1, caractérisé en ce qu'il est prévu comme moyen d'actionnement une pompe (13, 25, 109) à vitesse de rotation commandée et en ce qu'il est prévu une soupape (14, 16, 17, 28, 29, 34, 35, 50, 54, 72, 77, 78, 82, 91 à 93, 100 à 102, 108) commandée électriquement.

3. Système de refroidissement selon la revendication 2, caractérisé en ce qu'en plus du refroidisseur (3) pour le réfrigérant du moteur il est associé à au moins un autre échangeur de chaleur (4, 6), une dérivation (27, 33) commandée par soupape.

4. Système de refroidissement selon les revendications 2 et 3, caractérisé en ce qu'au moins un circuit de refroidissement est équipé d'une pompe (13, 25) à vitesse de rotation commandée et d'une dérivation (15, 27) commandée par soupape.

5. Système de refroidissement selon l'une des revendications précédentes, caractérisé en ce que pour le bloc-moteur (70) et la culasse (71) il est prévu pour chacun une arrivée de réfrigérant et un départ de réfrigérant séparés et l'un au moins de ces branchements de réfrigérant peut être réduit ou fermé au moyen d'une soupape (72).

6. Système de refroidissement selon l'une des revendications précédentes, caractérisé en ce qu'il est prévu un circuit de refroidissement (5, 37, 39) pour l'huile de la boîte de vitesses.

7. Système de refroidissement selon l'une des revendications précédentes, caractérisé en ce que dans les circuits de refroidissement pour l'huile du moteur et/ou l'air de charge et/ou l'huile de la boîte de vitesses il est monté un échangeur de chaleur intermédiaire (43, 45, 90), qui est alimenté avec un fluide de support intermédiaire, ce dernier étant de préférence un réfrigérant qui du point de vue de sa consistance. correspond à celui du circuit de refroidissement du moteur.

8. Système de refroidissement selon la revendication 7, caractérisé en ce que pour le réfrigérant du moteur il est prévu au moins deux échangeurs de chaleur (3, 44, 46) montés en parallèle en ce qui concerne l'écoulement et en ce que dans les tuyauteries de liaison (53) de ces échangeurs de chaleur (3, 44, 46) et/ou les échangeurs de chaleur intermédiaires (43, 45), il est monté des moyens à soupape (54) et dans les tuyauteries de branchement du réfrigérant (48) des échangeurs de chaleur intermédiaires (43, 45), il est prévu des pompes (52) à vitesse de rotation commandée.

9. Système de refroidissement selon l'une des revendications précédentes, caractérisé en ce que dans le tuyau d'échappement des gaz du moteur à combustion interne (1) il est prévu un échangeur de chaleur des gaz d'échappement (79, 105), qui est asservi, en ce qui concerne l'écoulement, à un turbo-compresseur (9), l'échangeur de chaleur des gaz d'échappement (105) étant de préférence alimenté, côté secondaire, par un courant d'air produit au moyen d'un ventilateur et le courant d'air étant envoyé à un échangeur de chaleur (103) traversé par le réfrigérant du circuit de refroidissement du moteur.

10. Système de refroidissement selon l'une des revendications précédentes, caractérisé en ce qu'au corps de chauffage (8), de puissance réglée, d'un système de chauffage du véhicule est raccordé un accumulateur de chaleur (9), l'accumulateur de chaleur (99) pouvant être monté en série avec le corps de chauffage (8) ou de manière à contourner celle-ci ou totalement fermé.

11. Système de refroidissement selon la revendication 1, caractérisé en ce que sont raccordés au circuit de réfrigérant des dispositifs de chauffage (75) supplémentaires pour des groupes auxiliaires.

12. Système de refroidissement selon l'une des revendications précédentes, caractérisé en ce qu'il est prévu au moins une tuyauterie de réfrigérant, pouvant être fermée, du circuit de refroidissement du moteur, destinée à refroidir des groupes auxiliaires (76).

13. Système de refroidissement selon l'une des revendications précédentes, caractérisé en ce qu'aux échangeurs de chaleur (3, 4, 6, 7, 44, 46) recevant l'air de refroidissement est associé au moins un ventilateur (62) à vitesse de rotation commandée, un moteur électrique (63), un embrayage à friction à liquide ou un entraînement hydrostatique servant à l'entraînement du ventilateur (62).

14. Système de refroidissement selon la revendication 13, caractérisé en ce que la vitesse de rotation du ventilateur (62) est réglable en fonction de signaux de sortie de l'unité de commande (10) centrale.

15. Système de refroidissement selon la revendication 13, caractérisé en ce que dans le parcours d'écoulement de l'air il est prévu un volet (60) qui est commandé en fonction de signaux de sortie de l'unité de commande (10) centrale, un échangeur de chaleur (4, 6) au moins étant doté d'un déflecteur d'air (64, 65) commandé ou le parcours d'écoulement d'air pouvant être fermé en aval de l'ensemble des échangeurs de chaleur.

16. Système de refroidissement selon la revendication 15, caractérisé en ce qu'un canal de guidage d'air (111) séparé est prévu pour l'alimentation contrôlée en air de refroidissement de groupes déterminés, dans l'enceinte du moteur.

17. Système de refroidissement selon l'une des revendications précédentes, caractérisé en ce qu'il est prévu, outre plusieurs sondes de température, au moins une sonde de pression (83), un capteur de niveau (84, 98) et/ou un capteur de vitesse (88) pour la vitesse de rotation du vilebrequin du moteur à combustion interne (1).
